# EUROPÄISCHE PATENTSCHRIFT

(11) **EP 3 862 746 B1**
(45) Veröffentlichungstag und Bekanntmachung des Hinweises auf die Patenterteilung: **28.02.2024**
(21) Anmeldenummer: 21154063.8
(22) Anmeldetag: 28.01.2021
(51) Int. Cl.: G01N 21/31, G01N 21/47, G01N 21/55, B29C 70/38, B29C 70/54, G06T 7/00, G01N 21/84

(54) **VERFAHREN UND VORRICHTUNG ZUM ERMITTELN EINER APPLIKATIONSEIGENSCHAFT**
METHOD AND DEVICE FOR DETERMINING AN APPLICATION CHARACTERISTIC
PROCÉDÉ ET DISPOSITIF DE DÉTERMINATION D'UNE PROPRIÉTÉ D'APPLICATION

(30) Priorität: 04.02.2020 DE 102020102800
(43) Veröffentlichungstag der Anmeldung: 11.08.2021
(73) Patentinhaber: Deutsches Zentrum für Luft- und Raumfahrt e.V., 53227 Bonn-Oberkassel (DE)
(72) Erfinder: Meister, Sebastian, 21680 Stade (DE)
(74) Vertreter: Gramm, Lins & Partner Patent- und Rechtsanwälte PartGmbB

(56) Entgegenhaltungen:
- EP-A1- 3 450 965
- DE-A1-102017 116 036
- US-A1- 2006 152 712
- US-A1- 2012 268 586
- US-A1- 2019 160 703
- US-A1- 2020 027 206

## Beschreibung

Die Erfindung betrifft ein Verfahren und eine Vorrichtung zum Ermitteln einer Applikationseigenschaft eines auf ein Fasermaterial eines Faserverbundwerkstoffes applizierten Hilfswerkstoffes, wobei der Faserverbundwerkstoff das Fasermaterial und ein das Fasermaterial einbettendes Matrixmaterial zur Herstellung eines Faserverbundbauteils aufweist. Die Erfindung betrifft ebenso ein Verfahren zur Herstellung einer Faserpreform zur Herstellung eines Faserverbundbauteils hierzu.

Aufgrund der gewichtsspezifischen Festigkeit und Steifigkeit von Faserverbundbauteilen, die aus einem Faserverbundwerkstoff hergestellt werden, sind derartige Bauteile aus der Luft- und Raumfahrt sowie aus vielen weiteren Anwendungsgebieten, wie beispielsweise dem Automobilbereich, heutzutage kaum mehr wegzudenken. Bei der Herstellung eines Faserverbundbauteils wird dabei ein das Fasermaterial einbettendes Matrixmaterial meist unter Temperatur- und Druckbeaufschlagung ausgehärtet und bildet so nach dem Aushärten eine integrale Einheit mit dem Fasermaterial. Die Verstärkungsfasern des Fasermaterials werden hierdurch in ihre vorgegebene Richtung gezwungen und können die auftretenden Lasten in die vor-gegebene Richtung abtragen.

Faserverbundwerkstoffe, aus denen derartige Faserverbundbauteile hergestellt werden, weisen in der Regel zwei Hauptbestandteile auf, nämlich zum einen ein Fasermaterial und zum anderen ein Matrixmaterial. Hierneben können noch weitere sekundäre Bestandteile verwendet werden, wie beispielsweise Bindermaterialien oder zusätzliche Funktionselemente, die in das Bauteil integriert werden sollen. Werden für die Herstellung trockene Fasermaterialien bereitgestellt, so wird während des Herstellungsprozesses das Matrixmaterial des Faserverbundwerkstoffes in das Fasermaterial durch einen Infusionsprozess infundiert, durch den das trockene Fasermaterial mit dem Matrixmaterial imprägniert wird. Dies geschieht in der Regel aufgrund einer Druckdifferenz zwischen dem Matrixmaterial und dem Fasermaterial, indem beispielsweise das Fasermaterial mittels einer Vakuumpumpe evakuiert wird. Im Gegensatz hierzu sind auch Faserverbundwerkstoffe bekannt, bei denen das Fasermaterial mit dem Matrixmaterial bereits vorimprägniert ist (sogenannte Prepregs).

Vor dem Aushärten bzw. Konsolidieren des Matrixmaterials wird in der Regel das Fasermaterial in ein Formwerkzeug eingebracht, das mit seiner formgebenden Werkzeugoberfläche die spätere Bauteilform nachbildet. Dabei können sowohl trockene als auch vorimprägnierte Fasermaterialien in das Formwerkzeug abgelegt bzw. eingebracht werden. Zur Herstellung von großskaligen Strukturbauteilen, wie beispielsweise Flügelschalen von Verkehrsflugzeugen oder Rotorblätter von Windkraftanlagen, werden zur Optimierung des Ablegeverfahrens automatisierte Faserablegeprozesse verwendet, bei denen mithilfe einer Fertigungsanlage und mindestens einem Faserlegekopf ein dem Faserlegekopf zugeführtes quasiendloses Fasermaterial auf dem Werkzeug abgelegt wird. Bei der sogenannten Fiber Placement Technologie werden beispielsweise vorimprägnierte Fasermaterialien bahnweise auf dem Formwerkzeug mithilfe eines derartigen Faserlegekopfes abgelegt. Der Faserlegekopf ist dabei an einem Roboter angeordnet und kann gegenüber dem Formwerkzeug relativ verfahren bzw. bewegt werden. Hierdurch können die einzelnen Faserbahnen auf der Werkzeugoberfläche zuerst bahnweise und dann lagenweise abgelegt werden. Bei der Fiber Placement Technologie werden dabei gleichzeitig mehrere, meist 8, 16 oder 32 schmale Materialstreifen, sogenannte Tows, auf dem Werkzeug abgelegt. Im Gegensatz hierzu werden bei der Fiber Tape Laying Technologie meist breite Faserbahnen, auch Tapes genannt (in der Regel 150 mm, 300 mm oder 600 mm breit mit einer Dicke von wenigen Zehntel Millimeter), mithilfe des Faserlegekopfes auf dem Formwerkzeug abgelegt.

Eine solche automatisierte Faserlegeanlage ist beispielsweise aus der DE 10 2010 015 027 B1 bekannt, bei der auf einem umlaufenden Schienensystem mehrere Roboter geführt werden, die jeweils einen Ablegekopf als Endeffektor haben. Mittels einer Faserzuführung werden den Ablegeköpfen kontinuierlich Fasermaterial aus einem Fasermagazin zugeführt, während die einzelnen Roboter mit ihren Ablege-köpfen das ihnen zugeführte Fasermaterial auf einem in der Mitte des umlaufenden Schienensystems vorgesehenen Formwerkzeug ablegen. Mithilfe der Faserlegeköpfe werden somit in dem Formwerkzeug sogenannte Faserlaminate, auch Faserpreformen genannt, hergestellt, bei denen der Prozess des Infundierens des Matrixmaterials bzw. des Aushärtens des Matrixmaterials noch nicht stattgefunden hat. Derartige Faserlaminate bilden somit das Bauteil in einem Rohzustand vor dem Aushärten des Matrixmaterials ab.

Faserlaminate bzw. Faserpreformen für großskaligen Strukturbauteilen, wie beispielsweise Flügel oder Rotorblätter, bestehen nicht selten aus vielen Einzellagen, die je nach Anwendungsgebiet des Bauteils auch mehr als 100 Lagen umfassen können. Zur Gewährleistung einer hohen Bauteilqualität muss die Anzahl auftretender Prozessfehler bei der Ablage des Fasermaterials minimiert bzw. gänzlich verhindert werden. Das Auftreten von Prozessfehlern bzw. Fertigungsabweichungen mit gro-ßem negativen Einfluss auf die Festigkeit der Bauteilstruktur muss nach Möglichkeit vollständig im Prozess erkannt und wünschenswerter Weise auch unterbunden werden.

In der Praxis hat sich hierfür oftmals die manuelle Inspektion der Faserlaminate bzw. der Einzellagen etabliert. Je nach Bauteilgröße, Mitarbeiterverfügbarkeit und Fehlerhäufigkeit innerhalb einer Einzellagen werden im Mittel etwa 15 bis 30 Minuten benötigt, die Ablage einer einzigen Faserlage zu untersuchen. Da jedoch die Ablage einer einzelnen Faserlage in der Regel deutlich schneller mithilfe automatisierter Faserlegeanlagen durchgeführt werden kann, wird durch die manuelle Inspektion die Anlageneffizienz deutlich herabgesetzt. So werden bei der Herstellung von Flügelschalen für Kurzstreckenflugzeuge bis zu 400 Einzellagen benötigt, woraus sich aufgrund der manuellen Inspektion ein Anlagenstillstand von 6000 bis 12.000 Minuten pro Bauteil ergibt.

Ebenso ist die Inspektion durch einen geschulten Mitarbeiter stark vom Erfahrungsgrad abhängig und darüber hinaus nicht in dem Maße qualitativ ausreichend, wie es die Fertigungstoleranzen eigentlich erfordern. Als Beispiel ist ein zulässiger Abstand zwischen 2 Materialbahnen von 1 mm genannt, der qualitativ nur unter Verwendung von Hilfsmitteln und dies auch nur stichpunktartig untersucht werden kann.

So ist aus der DE 10 2013 104 546 A1 ein Verfahren zum Erkennen von Fehlstellen von auf einer Werkzeugoberfläche abgelegten Faserhalbzeugen bekannt, wobei mithilfe eines Lichtprojektionsverfahrens, bei dem die Oberfläche mit Licht einer Lichtquelle aus einer ersten Richtung beleuchtet und das von der Oberfläche reflektierte Licht aus einer anderen, zweiten Richtung mit einer Kamera aufgenommen wird, ein Höhenprofil der Fasermaterialoberfläche in Abhängigkeit von den aufgenommenen Bilddaten der Kamera erzeugt wird. Anhand dieses Höhenprofils können nun Fehlstellen durch eine Bildauswertung in der Fasermaterialoberfläche erkannt werden.

Aus der DE 10 2013 112 260 A1 ist ebenfalls ein Verfahren zum Erkennen von Fehlstellen mithilfe eines Lichtprojektionsverfahrens bekannt, wobei hierbei die Fasermaterialoberfläche zusätzlich zu dem Licht der Lichtquelle des Lichtprojektionsverfahrens mittels einer Beleuchtungseinheit beleuchtet wird und anschließend zusätzlich zu dem Höhenprofil die Fehlstellen auch in Abhängigkeit einer Intensitätsverteilung des reflektierten Lichtes der Beleuchtungseinheit ermittelt werden.

Weiterhin ist aus der DE 10 2013 104 545 A1 ein Verfahren zum Erkennen von Fehlstellen mithilfe eines Lichtprojektionsverfahrens bekannt, wobei hierbei zusätzlich zu der Ermittlung des Höhenprofils die Werkzeugoberfläche oder die abgelegten Fasermaterialien temperiert und anschließend mit einer Thermokamera aufgenommen werden. Basierend auf den Thermographiebildern der Thermographiekamera sowie dem zugrunde liegenden Höhenprofil aus dem Lichtprojektionsverfahren können nun Fehlstellen auf der Fasermaterialoberfläche erkannt werden.

Des Weiteren ist aus der nachveröffentlichten DE 10 2018 124 079.1 ein Verfahren und eine Vorrichtung zum Ermitteln von Fehlstellen von Fasermaterialien bekannt, bei dem die Fasermaterialoberfläche von vorimprägnierten Fasermaterialien durch mindestens einen Bildsensor einer bildgebenden Aufnahmenvorrichtung in einem Wellenlängenspektrum außerhalb des sichtbaren Spektrums aufgenommen wird. In Abhängigkeit von auf dieser Basis generierten digitalen Bilddaten werden nun Fehlstellen an dem abgelegten, vorimprägnierten Fasermaterialien erkannt.

Aus der nachveröffentlichten DE 10 2019 112 312.7 ist ein Verfahren zum dreidimensionalen Erfassen einer Fasermaterialoberfläche eines Fasermaterials eines Faserverbundwerkstoffes bekannt, bei dem die Fasermaterialoberfläche mit mindestens zwei polarisationssensitiven Aufnahmesensoriken aufgenommen und aus den resultierenden Messdaten dann dreidimensionale Oberflächendaten der Fasermaterialoberfläche erstellt werden. Hieraus ergibt sich dann beispielsweise ein digitales, dreidimensionales Oberflächenmodell der zu erfassenden Fasermaterialoberfläche.

Aus der nachveröffentlichten DE 10 2019 112 317.8 ist ein Verfahren zum Erkennen von geometrischen Oberflächenfehlern einer Fasermaterialoberfläche bekannt, bei dem die Fasermaterialoberfläche mit verschiedenen elektromagnetischen Strahlungen unterschiedlicher Polarisation bestrahlt wird. Mithilfe einer Auswerteeinheit können dann aus den polarisationsabhängigen Messdaten, die von der Fasermaterialoberfläche aufgenommen wurden, geometrische Oberflächenfehler erkannt werden. Durch die Variation der Polarisation der emittierten Strahlung und den verschiedenen Winkeln der Bestrahlung können die reflektierten Strahlungen bzw. Reflexionen von der Materialoberfläche eindeutig einer Strahlungsquelle zugeordnet wer-den, wodurch es möglich wird, geometrische Inhomogenitäten auf der Materialoberfläche prozesssicher erkennen zu können und darüber hinaus gegebenenfalls den Fehler auch zu charakterisieren.

Zur Reduktion der Halbzeugkosten kann es sinnvoll sein, bei der automatisierten Faserablage anstelle von vorimprägnierten Fasermaterialien (Prepregs) trockenes Fasermaterial zu verwenden, wobei anschließend nach der Herstellung der Faserpreform das trockene Fasermaterial mit dem Matrixmaterial infundiert werden muss. Um das trockene Fasermaterial automatisiert verarbeiten zu können, wird im Legeprozess ein oftmals ein Bindermaterial (beispielsweise ein thermoplastisches Binderpolymer) aufgebracht, um die so gebildete Faserpreform insbesondere zu fixieren. Die genauen Dosierung und homogene Verteilung des Bindermaterials ist dabei essenziell, um die nachgeschaltete Infiltration des Fasermaterials mit dem Matrixmaterial in der gewünschten Qualität durchführen zu können. Andernfalls besitzt das Bauteil nicht die geforderten Fertigungseigenschaften und muss ausgesondert werden.

Die US 2020/0027206 A1 offenbart das Ermitteln einer Qualitätseigenschaft beim Auftragen eines Bindermaterials dahingehend, dass festgestellt werden soll, ob alle Faserbündel mithilfe eines Bindermaterials fixiert sind. Hierfür wird die Oberfläche des Fasermaterials zusammen mit dem Bindermaterial durch ein Kamerasystem aufgenommen und mithilfe einer künstlichen Intelligenz in Form eines gelernten neuronalen Netzes verarbeitet. Mithilfe der KI kann dann klassifiziert werden, ob sämtliche Faserbündel fixiert sind und wie hoch der Anteil von aufgeschmolzenen Kunststoff ist.

Die US 2019/160703 A1 offenbar die Verteilung eines applizierten Binders auf ein faserverstärktes Bauteil, indem dem Bindermaterial ein Farbstoff beigemischt wird, der nach dem Auftrag auf das Bauteil mithilfe einer Kamera erfasst werden kann. Basierend auf dem erfassten Digitalbild mit dem aufgetragenen, farblich veränderten Bindermaterial lässt sich dann feststellen, ob das Bindermaterial prozesssicher aufgetragen und den Qualitätsanforderungen entspricht.

Die EP 3 450 965 A1 offenbart ein Inspektionssystem zum Erkennen von defekten an Bauteilen mithilfe eines Kamerasystems. Dabei soll unter anderem auch das Bauteil beleuchtet werden, um die reflektierten Lichtstrahlen hinsichtlich der Homogenität zu untersuchen.

Die DE 10 2017 116 036 A1 offenbart ein Verfahren und eine Vorrichtung zum Erkennen von Fehlstellen auf abgelegten Fasermaterialien mithilfe eines Höhenprofils, welches mithilfe eines Laserlichtschnittsensors ermittelt wird.

Die US 2021/0268586 A offenbart ein Verfahren und eine Anlage zum Ermitteln des Aushärtegrades eines Bindermaterials, in dem ein digitales Farbbild des Bauteils mit dem Bindermaterial aufgenommen und untersucht wird.

Die US 2006/0152712 A1 offenbart schließlich ein Verfahren und ein System zur Untersuchung von Bauteilen mithilfe von durch Kameras aufgenommenen Digitalbildern.

Vor diesem Hintergrund ist es Aufgabe der vorliegenden Erfindung ein verbessertes Verfahren und eine verbesserte Vorrichtung anzugeben, um eine automatisierte Qualitätssicherung eines auf ein Fasermaterial aufgetragenen Hilfswerkstoffes durchführen zu können.

Die Aufgabe wird mit dem Verfahren zum Ermitteln einer Applikationseigenschaft gemäß Anspruch 1, dem Verfahren zur Herstellung einer Faserpreform gemäß Anspruch 8 sowie einer Faserlegeanlage zum Ablegen von Fasermaterial gemäß Anspruch 10 erfindungsgemäß gelöst. Vorteilhafte Ausgestaltungen der Erfindung finden sich in den entsprechenden Unteransprüchen.

Gemäß Patentanspruch 1 wird ein Verfahren zum Ermitteln einer Applikationseigenschaft eines auf ein Fasermaterial eines Faserverbundwerkstoffes applizierten Hilfswerkstoffes vorgeschlagen, wobei der Faserverbundwerkstoff das Fasermaterial und ein das Fasermaterial einbettendes Matrixmaterial zur Herstellung eines Faserverbundbauteils aufweist. Dabei wird zunächst das mit dem Hilfswerkstoff applizierte Fasermaterial mittels mindestens eines elektromagnetischen Strahlensensors einer Aufnahmesensorik aufgenommen und mindestens eine elektromagnetische Rückstrahleigenschaft des mit dem Hilfswerkstoff applizierten Fasermaterials basierend auf der mit der Aufnahmesensorik aufgenommenen elektromagnetischen Strahlung ermittelt.

Bei der elektromagnetischen Rückstrahleigenschaft handelt es sich im weitesten Sinne um eine Strahlungseigenschaft der durch die Aufnahmesensorik aufgenommenen elektromagnetischen Strahlung, die zumindest teilweise auf der Reflexion von elektromagnetischer Strahlung an dem mit dem Hilfswerkstoff applizierten Fasermaterial basiert. Die elektromagnetische Rückstrahlung beruht somit auf der Reflexion von elektromagnetischer Strahlung an dem applizierten Hilfswerkstoff und gegebenenfalls des Fasermaterials. Im weitesten Sinne wird dabei die elektromagnetische Strahlung an der Oberfläche des abgelegten Fasermaterials mit dem applizierten Hilfswerkstoff reflektiert, wobei diese Strahlung als Rückstrahlung bezeichnet wird.

In Abhängigkeit von der mindestens einen ermittelten elektromagnetischen Rückstrahleigenschaft wird nun mittels einer Auswerteeinheit mindestens eine Applikationseigenschaft des auf das Fasermaterial applizierten Hilfswerkstoffes ermittelt, wobei basierend auf der Applikationseigenschaft des applizierten Hilfswerkstoffes dann eine Qualitätssicherung automatisiert durchgeführt werden kann. So kann die ermittelte Applikationseigenschaft beispielsweise dahingehend analysiert werden um festzustellen, ob der Hilfswerkstoff innerhalb der Fertigungstoleranzen prozesssicher aufgetragen wurde.

Erfindungsgemäß ist dabei vorgesehen, dass eine bidirektionale Reflektanzverteilungsfunktion (BRDF) und/oder eine bidirektionale Streuungsverteilungsfunktion (BSDF) der elektromagnetischen Strahlung als elektromagnetische Rückstrahleigenschaft ermittelt wird.

Bei dem Hilfswerkstoff kann es sich in erster Linie um ein Bindermaterial, beispielsweise ein thermoplastisches Bindermaterial handeln, das auf ein trockenes Fasermaterial aufgetragen wurde. Demzufolge wird mittels des mindestens einen elektromagnetischen Strahlensensors ein trockenes Fasermaterial aufgenommen, das mit dem Hilfswerkstoff appliziert wurde.

Mit der vorliegenden Erfindung wird es möglich, auch direkt während des Ablegeprozesses des Fasermaterials eine Qualitätssicherung des applizierten Hilfswerkstoffes, insbesondere hinsichtlich der Dosierung und der Homogenität, durchzuführen, wodurch schnell und prozesssicher automatisiert einer Qualitätssicherung durchführbar wird. Es wurde dabei erkannt, dass basierend auf einer ermittelten elektromagnetischen Rückstrahleigenschaft des mit dem Hilfswerkstoff applizierten Fasermaterials eine Applikationseigenschaft des Hilfswerkstoffes ermittelt werden kann, aus der sich dann eine Qualitätssicherung insbesondere hinsichtlich der Dosierung und der Homogenität des Hilfswerkstoffes durchführen lässt. Es wurde dabei insbesondere erkannt, dass dieser Prozess während der Ablage des Fasermaterials durchführbar ist und prozesssicher Ergebnisse liefert. Der Prozess ist dabei des Weiteren berührungslose durchführbar und kann im Nachlauf einer Faserablage durchgeführt werden.

Bei dem elektromagnetischen Strahlensensor kann es sich beispielsweise um einen optischen Sensor in Form einer Kamera handeln, der elektromagnetische Strahlung (elektromagnetische Wellen) in einem definierten Wellenlängenspektrum aufnehmen kann.

Gemäß einer Ausführungsform kann dabei vorgesehen sein, dass das mit dem Hilfswerkstoff applizierte Fasermaterial mit einer elektromagnetischen Strahlung bestrahlt wird, um so eine verbesserte optischer Resonanz des betrachteten Materials auf die Bestrahlung mit elektromagnetischer Strahlung zu erzeugen.

Gemäß einer Ausführungsform ist vorgesehen, dass eine elektromagnetische Rückstrahlintensität, ein Emissionsgrad, ein Absorptionsgrad, eine Reflexionseigenschaft und/oder eine Streueigenschaft, die von dem mit dem Hilfswerkstoff applizierten Fasermaterial in Richtung des mindestens einen elektromagnetischen Strahlensensors reflektiert und von dem elektromagnetischen Strahlensensor aufgenommen wird, als elektromagnetische Rückstrahleigenschaft ermittelt wird.

Unter dem Emissionsgrad wird dabei insbesondere verstanden, wie viel Strahlung bzw. wie viel Wärmestrahlung im Vergleich zu einer idealen Strahlung bzw. Wärmestrahlung reflektiert wird. Proportional dazu wird unter dem Absorptionsgrad das Verhältnis verstanden, wie viel elektromagnetische Strahlung von dem Material absorbiert wird.

Zur Beschreibung der optischen Resonanz der betrachteten Oberfläche können weiterhin auch komplexere und detailliertere Eigenschaften bzw. Parameter herangezogen werden, welche die optische Resonanz im Raum beschreiben. Hierzu können beispielsweise die bidirektionale Reflektanzverteilungsfunktion und/oder die bidirektionale Steuerungs Verteilung genutzt werden. Diese mathematischen Modelle beschreiben die Reflexion sowie die Streuung von eingeschalteter elektromagnetischer Strahlung.

Gemäß einer Ausführungsform ist vorgesehen, dass eine Dosierungseigenschaft und/oder eine Homogenitätseigenschaft des auf das Fasermaterial applizierten Hilfswerkstoffes als Applikationseigenschaft ermittelt wird. Unter einer Dosierungseigenschaft wird dabei insbesondere die Menge des applizierten Hilfswerkstoffes (auch im Verhältnis pro Fläche) verstanden werden. Unter einer Dosierungseigenschaft kann aber auch die Dicke des aufgetragenen Hilfswerkstoffes verstanden werden. Unter einer Homogenitätseigenschaft wird dabei verstanden, wie homogen verteilt der Hilfswerkstoff appliziert wurde.

Gemäß einer Ausführungsform ist vorgesehen, dass mittels des elektromagnetischen Strahlensensors elektromagnetische Strahlung im Wellenlängenbereich des sichtbaren Lichtes, der Infrarotstrahlung und/oder der Ultraviolettstrahlung und/oder elektromagnetische Strahlung als Wärmestrahlung aufgenommen wird.

Gemäß einer Ausführungsform ist vorgesehen, dass die Oberfläche des mit dem Hilfswerkstoff applizierten Fasermaterials in eine Mehrzahl von Segmenten unterteilt wird, wobei für jedes Segment mindestens ein Wert zumindest einer der elektromagnetischen Rückstrahleigenschaften ermittelt wird. Hierfür ergeben sich dann für den betrachteten Bereich, der eine Mehrzahl von Segmenten hat, eine Mehrzahl von Werten zumindest einer elektromagnetischen Rückstrahleigenschaft, aus denen sich dann die Applikationseigenschaft ermitteln lässt. Demnach ist es vorteilhaft, wenn die Applikationseigenschaft in Abhängigkeit von den für jedes Segment ermittelten Werten der jeweiligen elektromagnetischen Rückstrahleigenschaft ermittelt wird.

So kann beispielsweise für jedes betrachtete Segment die bidirektionale Reflektanzverteilungsfunktion und/oder die bidirektionale Streuungsverteilungsfunktion in Abhängigkeit von den aufgenommenen elektromagnetischen Strahlen für das jeweilige Segment berechnet werden, wobei nicht ausgeschlossen sein muss, dass auch weitere Eigenschaften wie der Emissionsgrad und der Absorptionsgrad für das jeweilige Segment berechnet werden. Basierend auf diesen elektromagnetischen Rückstrahleigenschaften, die nunmehr für jedes Segment im betrachteten Bereich vorliegen, lässt sich nun mindestens eine Applikationseigenschaft des auf das Fasermaterial applizierten Hilfswerkstoffes ermitteln, wodurch prozesssicher eine Qualitätssicherung der Applikation des Hilfswerkstoffes durchführbar ist.

Gemäß einer Ausführungsform ist vorgesehen, dass während der Aufnahme des mit dem Hilfswerkstoff applizierten Fasermaterials der mindestens eine elektromagnetische Strahlensensor gegenüber dem Fasermaterial verfahren und/oder das Fasermaterial gegenüber dem mindestens einen elektromagnetischen Strahlensensor bewegt wird.

Die Aufgabe wird im Übrigen auch mit einem Verfahren zur Herstellung einer Faserpreform erfindungsgemäß gelöst, wobei das Fasermaterial zur Herstellung der Faserpreform auf ein Werkzeug abgelegt und auf das Fasermaterial ein Hilfswerkstoff appliziert wird. Erfindungsgemäß ist nun vorgesehen, dass eine Applikationseigenschaft des auf das Fasermaterial applizierten Hilfswerkstoffes mit dem vorstehend beschriebenen Verfahren ermittelt wird.

Gemäß einer Ausführungsform ist vorgesehen, dass der mindestens eine elektromagnetische Strahlensensor der Aufnahmesensorik zusammen mit einem Faserlegekopf einer Faserlegeanlage zur Herstellung der Faserpreform während des Ablegens des Fasermaterials gegenüber dem bereits abgelegten Fasermaterial bewegt wird und die von dem Fasermaterial reflektierte elektromagnetische Strahlung aufnimmt.

Die Aufgabe wird im Übrigen auch mit der Faserlegeanlage zum Ablegen von Fasermaterial eines Faserverbundwerkstoffes auf ein Werkzeug zur Herstellung einer Faserpreform erfindungsgemäß gelöst, wobei die Faserlegeanlage eine Aufnahmesensorik und eine Auswerteeinheit zur Durchführung des vorstehend beschriebenen Verfahrens aufweist.

Gemäß einer Ausführungsform ist vorgesehen, dass die Faserlegeanlage mindestens einen Roboter hat, an dem als Endeffektor ein Faserlegekopf zum kontinuierlichen Ablegen des Fasermaterials vorgesehen ist, wobei der mindestens eine elektromagnetische Strahlensensor der Aufnahmesensorik an dem Faserlegekopf angeordnet ist.

Die Erfindung wird anhand der beigefügten Figuren beispielhaft näher erläutert. Es zeigen:
- Figur 1: schematische Darstellung einer Faserlegeanlage mit der erfindungsgemäßen Erfassungsvorrichtung;
- Figur 2: exemplarische Abbildung einer Fasermaterialablage mit Hilfswerkstoff;
- Figur 3: schematische Abbildung einer diskretisierten bidirektionalen Verteilung des Reflexionsverhaltens.

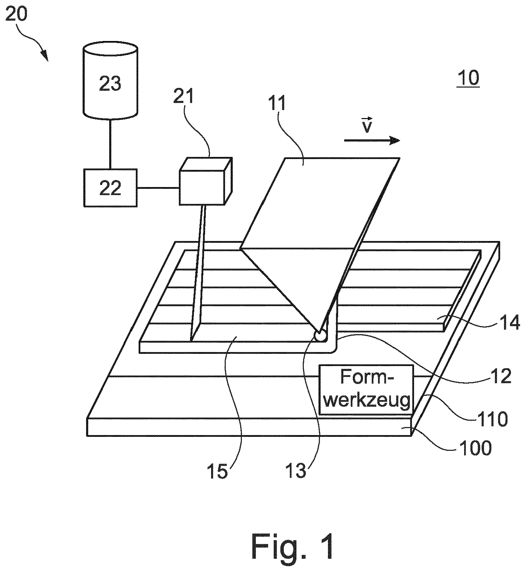

Figur 1 zeigt in einer schematisch stark vereinfachten Darstellung eine Faserlegeanlage 10, die einen Faserlegekopf 11 als Endeffektor eines nicht dargestellten Roboters hat. Dem Faserlegekopf 11 der Faserlegeanlage 10 wird dabei kontinuierlich ein bandförmige, quasiendloses Fasermaterial 12 zugeführt, dass mittels einer Kompaktierungsrolle 13 das dem Faserlegekopf 11 zugeführte Fasermaterial 12 auf eine formgebende Werkzeugoberfläche 110 eines Formwerkzeuges 100 ablegt.

Wie schematisch angedeutet, wird das Fasermaterial 12 nebeneinander und gegebenenfalls dann auch lagenweise übereinander abgelegt, um so die Faserpreform bzw. das Faserlaminat in dem Formwerkzeug 100 herzustellen.

Erfindungsgemäß ist nun im Nachlauf des Faserlegekopfes 11 mindestens ein elektromagnetischer Strahlensensor 21 (optischer Sensor) einer Erfassungsvorrichtung 20 angeordnet, der in Richtung der abgelegten Fasermaterialienoberfläche 15 des abgelegten Fasermaterials 14 ausgerichtet ist. Der elektromagnetische Strahlensensor 21 kann dabei so ausgebildet sein, dass eine elektromagnetische Strahlung in Richtung der Fasermaterialoberfläche 15 emittiert wird, um so die Fasermaterialoberfläche 15 zu Bestrahlen, wobei die von der Fasermaterialoberfläche 15 reflektierte eine elektromagnetische Strahlung durch den elektromagnetischen Strahlensensor 21 aufgenommen wird.

Da der elektromagnetische Strahlensensor 21 fest an dem Faserlegekopf 11 angeordnet ist, wird beim Ablegen des Fasermaterials 12 durch Bewegen des Faserlegekopfes 11 auch der elektromagnetische Strahlensensor 21 gegenüber der Fasermaterialoberfläche 15 des bereits abgelegten Fasermaterials 14 verfahren. Dadurch können an einer Vielzahl von Oberflächenpositionen jeweils Messungen durchgeführt werden, um eine Vielzahl von Rückstrahleigenschaften an verschiedenen Positionen zu ermitteln, um dann eine entsprechende Applikationseigenschaft des auf das Fasermaterial applizierten Hilfswerkstoffes in Abhängigkeit der ermittelten elektromagnetischen Rückstrahleigenschaft zu ermitteln.

Hierzu weist die Erfassungsvorrichtung 20 eine Datenverarbeitungseinheit 22 auf, die mit dem elektromagnetischen Strahlensensor 21 signaltechnisch in Verbindung steht und aus den Messdaten des Strahlensensors 21 schließlich die Applikationseigenschaft ermittelt. Diese so von der Auswerteeinheit 22 erzeugte Applikationseigenschaft und gegebenenfalls auch die Messdaten sowie die elektromagnetischen Rückstrahleigenschaften können dann in einem digitalen Datenspeicher 23 dauerhaft hinterlegt werden.

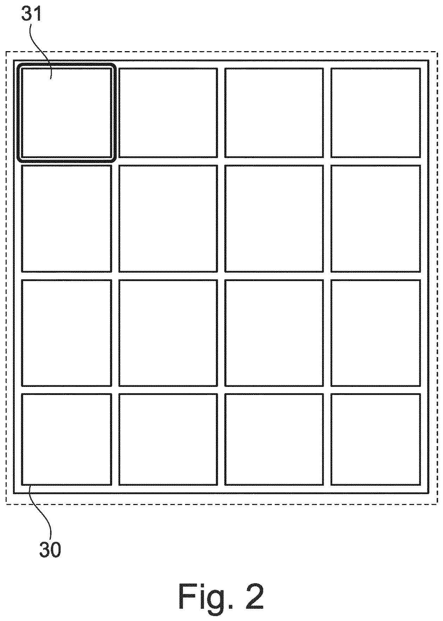

Figur 2 zeigt exemplarisch eine Fasermaterialoberfläche mit einem applizierten Hilfswerkstoffes, wobei innerhalb des Betrachtungsbereiches 30 eine Mehrzahl von Analysesegmente 31 gebildet werden, die dann separat voneinander untersucht werden. Für jedes einzelne Analysesegment kann dabei jeweils die bidirektionale Reflektanzverteilungsfunktion, die bidirektionale Streuungsverteilungsfunktion, der Emissionsgrad sowie der Absorptionsgrad berechnet werden.

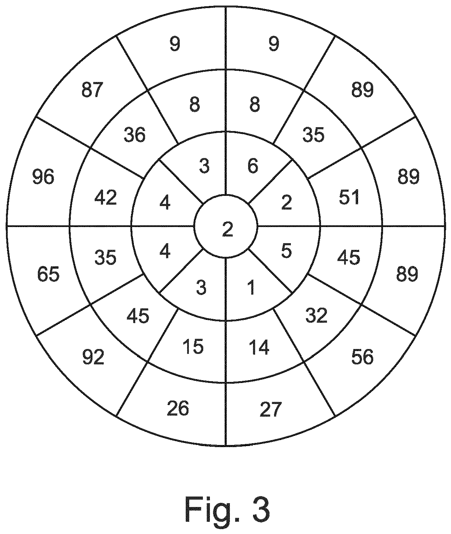

In Figur 3 ist dabei exemplarisch eine bidirektionale Verteilung des Reflexionsverhaltens für ein betrachtetes Analysesegment 31, wie dies aus Figur 2 bekannt ist, gezeigt. Die Werte der einzelnen numerischen Felder können dabei in einem Datenspeicher abgelegt und für den Vergleich mit anderen Analysesegmenten sowie zur Ermittlung der Applikationseigenschaft herangezogen werden. Die dargestellten numerischen Werte beschreiben dabei jeweils ein bestimmtes Reflexionsverhalten.

### Bezugszeichenliste

- 10: Faserlegeanlage
- 11: Faserlegekopf
- 12: Fasermaterial
- 13: Kompaktierungsrolle
- 14: abgelegtes Fasermaterial
- 15: Oberfläche des abgelegten Fasermaterials
- 20: Erfassungsvorrichtung
- 21: kohärenztomographischer Sensor
- 22: Auswerteeinheit
- 23: digitaler Datenspeicher
- 30: Betrachtungsbereich
- 31: Analysesegment

## Patentansprüche

1. Verfahren zum Ermitteln mindestens einer Applikationseigenschaft eines auf ein Fasermaterial (12) eines Faserverbundwerkstoffes applizierten Hilfswerkstoffes, wobei der Faserverbundwerkstoff das Fasermaterial (12) und ein das Fasermaterial (12) einbettendes Matrixmaterial zur Herstellung eines Faserverbundbauteils aufweist, wobei das Verfahren die folgenden Schritte umfasst:
- Aufnehmen des mit dem Hilfswerkstoff applizierten Fasermaterials (12) mittels mindestens eines elektromagnetischen Strahlensensors einer Aufnahmesensorik und Ermitteln mindestens einer elektromagnetischen Rückstrahleigenschaft des mit dem Hilfswerkstoff applizierten Fasermaterials (12) basierend auf der mit der Aufnahmesensorik aufgenommenen elektromagnetischen Strahlung; und
- Ermitteln der mindestens einen Applikationseigenschaft des auf das Fasermaterial (12) applizierten Hilfswerkstoffes in Abhängigkeit von der mindestens einen ermittelten elektromagnetischen Rückstrahleigenschaft mittels einer Auswerteeinheit (22),
**dadurch gekennzeichnet, dass** eine bidirektionale Reflektanzverteilungsfunktion (BRDF) und/oder eine bidirektionale Streuungsverteilungsfunktion (BSDF) der elektromagnetischen Strahlung, die von dem mit dem Hilfswerkstoff applizierten Fasermaterial (12) in Richtung des mindestens einen elektromagnetischen Strahlensensors reflektiert und von dem elektromagnetischen Strahlensensor aufgenommen wird, als elektromagnetische Rückstrahleigenschaft ermittelt wird.

2. Verfahren nach Anspruch 1, **dadurch gekennzeichnet, dass** eine elektromagnetische Rückstrahlintensität, ein Emissionsgrad, ein Absorptionsgrad, eine Reflexionseigenschaft und/oder eine Streueigenschaft der elektromagnetischen Strahlung, die von dem mit dem Hilfswerkstoff applizierten Fasermaterial (12) in Richtung des mindestens einen elektromagnetischen Strahlensensors reflektiert und von dem elektromagnetischen Strahlensensor aufgenommen wird, als elektromagnetische Rückstrahleigenschaft ermittelt wird.

3. Verfahren nach Anspruch 1 oder 2, **dadurch gekennzeichnet, dass** eine Dosierungseigenschaft und/oder eine Homogenitätseigenschaft des auf das Fasermaterial (12) applizierten Hilfswerkstoffes als Applikationseigenschaft ermittelt wird.

4. Verfahren nach einem der vorhergehenden Ansprüche, **dadurch gekennzeichnet, dass** mittels des elektromagnetischen Strahlensensors elektromagnetische Strahlung im Wellenlängenbereich des sichtbaren Lichtes, der Infrarotstrahlung und/oder der Ultraviolettstrahlung und/oder elektromagnetische Strahlung als Wärmestrahlung aufgenommen wird.

5. Verfahren nach einem der vorhergehenden Ansprüche, **dadurch gekennzeichnet, dass** die Oberfläche des mit dem Hilfswerkstoff applizierten Fasermaterials (12) in eine Mehrzahl von Segmenten unterteilt wird, wobei für jedes Segment mindestens ein Wert zumindest einer der elektromagnetischen Rückstrahleigenschaften ermittelt wird.

6. Verfahren nach Anspruch 5, **dadurch gekennzeichnet, dass** die Applikationseigenschaft in Abhängigkeit von den für jedes Segment ermittelten Werten der jeweiligen elektromagnetischen Rückstrahleigenschaft ermittelt wird.

7. Verfahren nach einem der vorhergehenden Ansprüche, **dadurch gekennzeichnet, dass** während der Aufnahme des mit dem Hilfswerkstoff applizierten Fasermaterials (12) der mindestens eine elektromagnetische Strahlensensor gegenüber dem Fasermaterial (12) verfahren und/oder das Fasermaterial (12) gegenüber dem mindestens einen elektromagnetischen Strahlensensor bewegt wird.

8. Verfahren zur Herstellung einer Faserpreform zur Herstellung eines Faserverbundbauteils aus einem Faserverbundwerkstoff aufweisend ein Fasermaterial (12) und ein das Fasermaterial (12) einbettendes Matrixmaterial, wobei das Fasermaterial (12) zur Herstellung der Faserpreform auf ein Werkzeug abgelegt und auf das Fasermaterial (12) ein Hilfswerkstoff appliziert wird, **dadurch gekennzeichnet, dass** eine Applikationseigenschaft des auf das Fasermaterial (12) applizierten Hilfswerkstoffes gemäß dem Verfahren nach einem der Ansprüche 1 bis 7 ermittelt wird.

9. Verfahren nach Anspruch 8, **dadurch gekennzeichnet, dass** der mindestens eine elektromagnetische Strahlensensor der Aufnahmesensorik zusammen mit einem Faserlegekopf (11) einer Faserlegeanlage (10) zur Herstellung der Faserpreform während des Ablegens des Fasermaterials (12) gegenüber dem bereits abgelegten Fasermaterial (14) bewegt wird und die von dem Fasermaterial (12) reflektierte elektromagnetische Strahlung aufnimmt.

10. Faserlegeanlage (10) zum Ablegen von Fasermaterial (12) eines Faserverbundwerkstoffes, der das Fasermaterial (12) und ein das Fasermaterial (12) einbettendes Matrixmaterial aufweist, auf ein Werkzeug zur Herstellung einer Faserpreform, aus der ein Faserverbundbauteil hergestellt werden soll, **dadurch gekennzeichnet, dass** die Faserlegeanlage (10) eine Erfassungsvorrichtung (20) mit einer Aufnahmesensorik und eine Auswerteeinheit (22) hat, die zur Durchführung des Verfahrens nach einem der Ansprüche 1 bis 7 ausgebildet ist.

11. Faserlegeanlage (10) nach Anspruch 10, **dadurch gekennzeichnet, dass** die Faserlegeanlage (10) einen Roboter hat, an dem als Endeffektor ein Faserlegekopf (11) zum kontinuierlichen Ablegen des Fasermaterials (12) vorgesehen ist, wobei der mindestens eine elektromagnetische Strahlensensor der Aufnahmesensorik an dem Faserlegekopf (11) angeordnet ist.

## Claims

1. A method for determining at least one application property of an auxiliary material applied to a fiber material (12) of a fiber composite material, the fiber composite material comprising the fiber material (12) and a matrix material embedding the fiber material (12) for producing a fiber composite component, the method comprising the following steps:
- Recording the fiber material (12) applied with the auxiliary material by means of at least one electromagnetic radiation sensor of a recording sensor system and determining at least one electromagnetic back radiation property of the fiber material (12) applied with the auxiliary material based on the electromagnetic radiation recorded by the recording sensor system; and
- Determining the at least one application property of the auxiliary material applied to the fiber material (12) based on the at least one determined electromagnetic back radiation property by means of an evaluation unit (22),
**characterized in that** a bidirectional reflectance distribution function (BRDF) and/or a bidirectional scattering distribution function (BSDF) of the electromagnetic radiation, which is reflected by the fiber material (12) applied with the auxiliary material in the direction of the at least one electromagnetic radiation sensor and is recorded by the electromagnetic radiation sensor, is determined as the electromagnetic back radiation property .

2. Method according to claim 1, **characterized in that** an electromagnetic back radiation intensity, an emissivity, an absorptivity, a reflection property and/or a scattering property of the electromagnetic radiation, which is reflected by the fiber material (12) applied with the auxiliary material in the direction of the at least one electromagnetic radiation sensor and is picked up by the electromagnetic radiation sensor, is determined as an electromagnetic back radiation property.

3. Method according to claim 1 or 2, **characterized in that** a dosing property and/or a homogeneity property of the auxiliary material applied to the fiber material (12) is determined as an application property.

4. Method according to one of the preceding claims, **characterized in that** electromagnetic radiation in the wavelength range of visible light, infrared radiation and/or ultraviolet radiation and/or electromagnetic radiation as thermal radiation is recorded by means of the electromagnetic radiation sensor.

5. Method according to one of the preceding claims, **characterized in that** the surface of the fiber material (12) applied with the auxiliary material is divided into a plurality of segments, at least one value of at least one of the electromagnetic back radiation property being determined for each segment.

6. Method according to claim 5, **characterized in that** the application property is determined as a function of the values of the respective electromagnetic back radiation property determined for each segment.

7. Method according to one of the preceding claims, **characterized in that** the at least one electromagnetic radiation sensor is moved relative to the fiber material (12) and/or the fiber material (12) is moved relative to the at least one electromagnetic radiation sensor while the fiber material (12) applied with the auxiliary material is being recorded.

8. Method for producing a fiber preform for producing a fiber composite component from a fiber composite material comprising a fiber material (12) and a matrix material embedding the fiber material (12), the fiber material (12) being deposited on a tool for producing the fiber preform and an auxiliary material being applied to the fiber material (12), **characterized in that** an application property of the auxiliary material applied to the fiber material (12) is determined in accordance with the method according to one of claims 1 to 7.

9. Method according to claim 8, **characterized in that** the at least one electromagnetic radiation sensor of the recording sensor system is moved together with a fiber laying head (11) of a fiber laying system (10) for producing the fiber preform during the depositing of the fiber material (12) relative to the already deposited fiber material (14) and records the electromagnetic radiation reflected by the fiber material (12).

10. Fiber laying system (10) for depositing fiber material (12) of a fiber composite material, which comprises the fiber material (12) and a matrix material embedding the fiber material (12), on a tool for producing a fiber preform from which a fiber composite component is to be produced, **characterized in that** the fiber laying system (10) has a detection device (20) with a recording sensor system and an evaluation unit (22) which is designed to carry out the method according to one of claims 1 to 7.

11. Fiber laying system (10) according to claim 10, **characterized in that** the fiber laying system (10) has a robot on which a fiber laying head (11) is provided as end effector for continuously depositing the fiber material (12), the at least one electromagnetic radiation sensor of the recording sensor system being arranged on the fiber laying head (11).

## Revendications

1. Procédé de détermination d'au moins une propriété d'application d'un matériau auxiliaire appliqué sur un matériau fibreux (12) d'un matériau composite à fibres, le matériau composite à fibres comprenant le matériau fibreux (12) et un matériau de matrice enrobant le matériau fibreux (12) pour la fabrication d'un composant composite à fibres, le procédé comprenant les étapes suivantes consistant à :
- enregistrer le matériau fibreux (12), appliqué avec le matériau auxiliaire, au moyen d'au moins un capteur de rayonnement électromagnétique d'un ensemble de capteurs d'enregistrement, et déterminer au moins une propriété de rétrodiffusion électromagnétique du matériau fibreux (12), appliqué avec le matériau auxiliaire, en se basant sur le rayonnement électromagnétique enregistré avec l'ensemble de capteurs d'enregistrement ; et
- déterminer ladite au moins une propriété d'application du matériau auxiliaire, appliqué sur le matériau fibreux (12), en fonction de ladite au moins une propriété de rétrodiffusion électromagnétique déterminée, au moyen d'une unité d'évaluation (22),
**caractérisé en ce qu'**une fonction de distribution de réflectance bidirectionnelle (BRDF) et/ou une fonction de distribution de dispersion bidirectionnelle (BSDF) du rayonnement électromagnétique réfléchi par le matériau fibreux (12), appliqué avec le matériau auxiliaire, en direction dudit au moins un capteur de rayonnement électromagnétique et enregistré par le capteur de rayonnement électromagnétique, est déterminée comme propriété de rétrodiffusion électromagnétique.

2. Procédé selon la revendication 1,
**caractérisé en ce qu'**une intensité de rétrodiffusion électromagnétique, un degré d'émission, un degré d'absorption, une propriété de réflexion, une propriété de dispersion du rayonnement électromagnétique réfléchi par le matériau fibreux (12), appliqué avec le matériau auxiliaire, en direction dudit au moins un capteur de rayonnement électromagnétique et enregistré par le capteur de rayonnement électromagnétique, est déterminée comme propriété de rétrodiffusion électromagnétique.

3. Procédé selon la revendication 1 ou 2,
**caractérisé en ce qu'**une propriété de dosage et/ou une propriété d'homogénéité du matériau auxiliaire, appliqué sur le matériau fibreux (12), est déterminée comme propriété d'application.

4. Procédé selon l'une des revendications précédentes,
**caractérisé en ce qu'**un rayonnement électromagnétique dans la plage de longueurs d'onde de la lumière visible, du rayonnement infrarouge et/ou du rayonnement ultraviolet et/ou un rayonnement électromagnétique sous forme de rayonnement thermique est enregistré au moyen du capteur de rayonnement électromagnétique.

5. Procédé selon l'une des revendications précédentes,
**caractérisé en ce que** la surface du matériau fibreux (12), appliqué avec le matériau auxiliaire, est divisée en une pluralité de segments, au moins une valeur d'au moins une des propriétés de rétrodiffusion électromagnétique étant déterminée pour chaque segment.

6. Procédé selon la revendication 5,
**caractérisé en ce que** la propriété d'application est déterminée en fonction des valeurs de la propriété de rétrodiffusion électromagnétique respective, déterminées pour chaque segment.

7. Procédé selon l'une des revendications précédentes,
**caractérisé en ce que**, pendant l'enregistrement du matériau fibreux (12) appliqué avec le matériau auxiliaire, ledit au moins un capteur de rayonnement électromagnétique est déplacé par rapport au matériau fibreux (12), et/ou le matériau fibreux (12) est déplacé par rapport audit au moins un capteur de rayonnement électromagnétique.

8. Procédé de fabrication d'une préforme de fibres pour la fabrication d'un composant composite à fibres à partir d'un matériau composite à fibres comprenant un matériau fibreux (12) et un matériau de matrice enrobant le matériau fibreux (12), le matériau fibreux (12) destiné à la fabrication de la préforme de fibres étant déposé sur un outil, et un matériau auxiliaire étant appliqué sur le matériau fibreux (12),
**caractérisé en ce qu'**une propriété d'application du matériau auxiliaire appliqué sur le matériau fibreux (12) est déterminée par le procédé selon l'une des revendications 1 à 7.

9. Procédé selon la revendication 8,
**caractérisé en ce que** pendant la dépose du matériau fibreux (12), ledit au moins un capteur de rayonnement électromagnétique de l'ensemble de capteurs d'enregistrement est déplacé, conjointement avec une tête de pose de fibres (11) d'une installation de pose de fibres (10) pour la fabrication de la préforme de fibres, par rapport au matériau fibreux (14) déjà déposé et enregistre le rayonnement électromagnétique réfléchi par le matériau fibreux (12).

10. Installation de pose de fibres (10) pour déposer un matériau fibreux (12) d'un matériau composite à fibres, comprenant le matériau fibreux (12) et un matériau de matrice enrobant le matériau fibreux (12), sur un outil pour la fabrication d'une préforme de fibres à partir de laquelle un composant composite à fibres doit être fabriqué,
**caractérisée en ce que** l'installation de pose de fibres (10) comprend un dispositif de détection (20) muni d'un ensemble de capteurs d'enregistrement et une unité d'évaluation (22), permettant de mettre en oeuvre le procédé selon l'une des revendications 1 à 7.

11. Installation de pose de fibres (10) selon la revendication 10,
**caractérisée en ce que** l'installation de pose de fibres (10) comprend un robot sur lequel est prévue, comme effecteur terminal, une tête de pose de fibres (11) pour déposer en continu le matériau fibreux (12), ledit au moins un capteur de rayonnement électromagnétique de l'ensemble de capteurs d'enregistrement étant disposé sur la tête de pose de fibres (11).
